# FASCICULE DE BREVET EUROPEEN

(11) **EP 3 380 230 B1**
(45) Date de publication et mention de la délivrance du brevet: **08.01.2020**
(21) Numéro de dépôt: 16794568.2
(22) Date de dépôt: 07.11.2016
(51) Int. Cl.: B01J 23/74, B01J 23/75, B01J 23/89, B01J 29/03, B01J 35/10, B01J 37/00, C10G 2/00, B01J 37/03, B01J 37/18

(54) **PROCEDE DE SYNTHESE D'HYDROCARBURES A PARTIR DE GAZ DE SYNTHESE EN PRESENCE D'UN CATALYSEUR A BASE DE COBALT PIEGE DANS UNE MATRICE OXYDE MESOPOREUSE ET OBTENU A PARTIR D'AU MOINS UN PRECURSEUR MONOMERIQUE**
VERFAHREN ZUR SYNTHESE VON KOHLENWASSERSTOFFEN AUS SYNTHESEGAS IN GEGENWART EINES KOBALTKATALYSATORS IN EINER MESOPORÖSEN OXIDMATRIX UND AUS MINDESTENS EINEM MONOMEREN VORLÄUFER
PROCESS FOR SYNTHESIZING HYDROCARBONS FROM SYNTHESIS GAS IN THE PRESENCE OF A COBALT-BASED CATALYST TRAPPED IN A MESOPOROUS OXIDE MATRIX AND OBTAINED FROM AT LEAST ONE MONOMERIC PRECURSOR

(30) Priorité: 23.11.2015 FR 1561270
(43) Date de publication de la demande: 03.10.2018
(73) Titulaire: IFP Energies nouvelles, 92500 Rueil-Malmaison (FR)
(72) Inventeur: CHAUMONNOT, Alexandra, 69003 Lyon (FR); FECANT, Antoine, 69530 Brignais (FR)
(74) Mandataire: IFP Energies nouvelles
(86) Numéro de dépôt international: PCT/EP2016/076881
(87) Numéro de publication internationale: WO 2017/089111

(56) Documents cités:
- EP-A1- 1 233 011
- WO-A1-2006/020648
- FR-A1- 2 969 509

## Description

### Domaine technique de l'invention

La présente invention se rapporte au domaine des procédés de synthèse Fischer-Tropsch (FT), c'est-à-dire aux procédés permettant la synthèse d'hydrocarbures à partir de gaz de synthèse. Plus particulièrement, la présente invention concerne un procédé de synthèse d'hydrocarbures à partir de gaz de synthèse utilisant un catalyseur à base de l'élément cobalt piégé dans une matrice oxyde mésoporeuse et obtenu à partir d'au moins un précurseur moléculaire.

### État de la technique antérieure

Les procédés de synthèse Fischer-Tropsch permettent d'obtenir une large gamme de coupes hydrocarbonées à partir du mélange CO + H₂, communément appelé gaz de synthèse. L'équation globale de la synthèse Fischer-Tropsch peut s'écrire de la manière suivante :

n CO + (2n+1) H₂ → CₙH₂ₙ₊₂ + n H₂O

La synthèse Fischer-Tropsch est au cœur des procédés de conversion du gaz naturel, du charbon ou de la biomasse, en carburants ou en intermédiaires pour l'industrie chimique. Ces procédés sont appelés GTL (« *Gas to Liquids* » selon la terminologie anglo-saxonne) dans le cas de l'utilisation de gaz naturel comme charge initiale, CTL *(« Coal to Liquids »* selon la terminologie anglo-saxonne) pour le charbon, et BTL (« *Biomass to Liquids »* selon la terminologie anglo-saxonne) pour la biomasse.

Dans chacun de ces cas, la charge initiale est tout d'abord gazéifiée en gaz de synthèse, un mélange de monoxyde de carbone et de dihydrogène. Le gaz de synthèse est ensuite transformé majoritairement en paraffines grâce à la synthèse Fischer-Tropsch, ces paraffines pouvant être ensuite transformées en carburants par un procédé d'hydroisomérisation-hydrocraquage. Par exemple, des procédés de transformation tels que l'hydrocraquage, le déparaffinage et l'hydroisomérisation des coupes lourdes (C16+) permettent de produire différents types de carburants dans la gamme des distillats moyens : gazole (coupe 180-370°C) et kérosène (coupe 140-300°C). Les fractions plus légères C5-C15 peuvent être distillées et utilisées comme solvants.

La réaction de synthèse Fischer-Tropsch peut être réalisée dans différents types de réacteurs (lit fixe, mobile, ou triphasique (gaz, liquide, solide) par exemple de type autoclave parfaitement agité, ou colonne à bulles), et les produits de la réaction présentent notamment la caractéristique d'être exempts de composés soufrés, azotés ou de type aromatique.

Dans une mise en œuvre dans un réacteur de type colonne à bulles (ou « *slurry bubble column »* selon la terminologie anglo-saxonne, ou encore « *slurry »* dans une expression simplifiée), la mise en œuvre du catalyseur est caractérisée par le fait que celui-ci est divisé à l'état de poudre très fine, typiquement de l'ordre de quelques dizaines de micromètres, cette poudre formant une suspension avec le milieu réactionnel.

La réaction Fischer-Tropsch se déroule de manière classique entre 1 et 4 MPa (10 et 40 bar), à des températures comprises traditionnellement entre 200°C et 350°C. La réaction est globalement exothermique, ce qui nécessite une attention particulière à la mise en œuvre du catalyseur.

Les catalyseurs employés pour la synthèse Fischer-Tropsch sont essentiellement des catalyseurs à base de cobalt ou de fer, même si d'autres métaux peuvent être utilisés. Néanmoins, le cobalt et le fer offrent un bon compromis performances/prix par rapport aux autres métaux.

Les méthodes conventionnelles de préparation des catalyseurs métalliques supportés utilisés pour la synthèse Fischer-Tropsch consistent à déposer un précurseur de la phase active (sel métallique ou complexe de coordination métal-ligand) sur un support oxyde (généralement de la famille des alumines), puis à réaliser une étape d'activation consistant en un ou plusieurs traitement(s) thermique(s) réalisés sous air et/ou sous hydrogène. Plus concrètement, les procédés de préparation de tels catalyseurs nécessitent de nombreuses étapes qui peuvent être résumées de la façon suivante : synthèse du support oxyde (par exemple par le procédé de synthèse dit « par atomisation », conduisant à des poudres compatibles avec une mise en œuvre de type « slurry »), une ou plusieurs étape(s) d'imprégnation permettant le dépôt du précurseur métallique, éventuellement une ou plusieurs étape(s) de séchage et/ou calcination sous air et, in fine, une ou plusieurs étape(s) d'activation (réduction). Chacune de ces étapes joue un rôle dans les performances du catalyseur résultant, en termes d'activité, de sélectivité et de stabilité dans les conditions d'utilisation du procédé. En particulier, la teneur, la taille, l'accessibilité, et donc la dispersion, de la phase active métallique vont dépendre en partie de paramètres tels que : la nature et la solubilité du précurseur métallique, les propriétés texturales et de surface du support oxyde préformé et les paramètres opératoires de l'imprégnation pour un contrôle des interactions précurseur métallique/surface du support oxyde.

Afin de rendre les procédés de synthèse Fischer-Tropsch compétitifs par rapport à d'autres procédés de synthèse d'hydrocarbures plus rentables mais écologiquement peu attractifs (procédés de transformation des ressources fossiles), une voie d'amélioration possible consiste à simplifier les méthodes conventionnelles d'obtention des catalyseurs FT décrites ci-dessus, tout en maintenant (voire en augmentant) les performances catalytiques associées. Une telle simplification permettrait des économies substantielles en termes de matières premières utilisées, d'énergie dépensée, de production des déchets, du rapport taille sur capacité du procédé, et d'appliquer ainsi le concept « d'intensification des procédés » au domaine de la synthèse Fischer-Tropsch.

Depuis une dizaine d'année, l'intérêt de la communauté scientifique s'est focalisé sur une méthodologie de synthèse originale combinant la chimie « sol-gel » avec des procédés de synthèse spécifiques tels que l'atomisation (encore appelé « *spray-drying »* selon la terminologie anglo-saxonne), le dépôt de films minces (encore appelé *« spin-coating »* selon la terminologie anglo-saxonne), etc. Cette approche a non seulement permis d'accéder à des supports oxydes innovants pour la catalyse mais également de proposer une méthode de synthèse « directe » de catalyseurs en s'affranchissant de la combinaison usuelle « synthèse du support oxyde + dépôt du précurseur de la phase active ». La revue parue dans Advanced Materials (2011, 23, 599) donne un aperçu global des travaux menés sur cette thématique lors de ces dernières années. Pour exemple, des nanoparticules (NP) métalliques préformées d'or, d'oxydes de titane, de fer ou de césium ont ainsi été incorporées directement lors de la synthèse de la matrice oxyde silicique mésoporeuse, cette dernière étant habituellement obtenue selon un processus distinct conduisant au dénommé « support ». Cette approche a été mise à profit avec succès pour l'obtention de catalyseurs d'hydrotraitement, d'hydrocraquage et d'hydroconversion (FR2886636, FR2969509, FR2969511, FR2969514, FR2969513) ou de métathèse (FR2977890). Elle a néanmoins été peu explorée pour le développement de catalyseurs FT. Une explication à cela est probablement liée à la complexité d'une telle méthodologie. En effet, la réactivité de chaque élément métallique est propre à sa nature, aux précurseurs choisis ainsi qu'à l'environnement chimique imposé par le milieu de synthèse (solvant, concentration, pH, température, additifs organiques et/ou inorganiques, etc.) et le procédé employé (paramètres procédés tels que les débits (charge et gaz vecteur), la température d'atomisation, la technologie de la buse génératrice de l'aérosol, etc.). Par conséquent, le développement de nouveaux solides, en termes de formulation chimique et de propriétés intrinsèques attendues par rapport à une application spécifique, n'est pas trivial.

Zeng et al., Journal of Aerosol Science, 2014, 76, 1 fait état de la synthèse d'un catalyseur potentiel pour l'application (FT). Dans ces travaux, des nanoparticules d'oxyde de cobalt préformées sont ajoutées à une suspension résultant du mélange de sols colloïdaux de silice (nanoparticules de silice préformées) et d'un polymère organique utilisé comme générateur de porosité. Zeng *et al.* indiquent que des résultats décevants sont obtenus, en particulier une mauvaise dispersion de l'élément cobalt, en partant de précurseurs de cobalt en solution. Cette stratégie, bien que précurseur dans la synthèse « directe » de catalyseurs à base de cobalt, présente l'inconvénient majeur de travailler avec des nanoparticules de Co₃O₄ préformées, leur obtention étant délicate, longue à mettre en œuvre (nombreuses étapes de synthèse) et peu compatible avec une production industrielle (rendement faible, gestion importante de solvants, contraintes opératoires fortes pour assurer la stabilité de tels sols colloïdaux, etc.). De plus, l'emploi de nanoparticules à base de Co et de silice préformées limite la réactivité des espèces à des interactions entre nanoparticules et ne fait pas intervenir la chimie des précurseurs moléculaires (ou conduisant à des espèces moléculaires), beaucoup plus fine et versatile en termes de potentialité de matériaux. Pour finir, aucun test associé à l'application FT ne prouve l'efficacité de tels solides pour cette application.

EP 1 233 011 décrit un procédé Fischer-Tropsch en présence d'un catalyseur comprenant au moins un métal du groupe VIII supporté sur une silice-alumine préparée par coprécipitation. La phase active est introduite par imprégnation.

WO2006/020648 A1 divulgue un procédé de préparation d'un catalyseur et son application dans le procédé Fisher-Tropsch. Le catalyseur est préparé par atomisation d'un mélange liquide-solide (slurry selon la terminologie anglo-saxonne) comprenant un précurseur du cobalt, de la poudre d'alumine et un agent peptisant pouvant être le nitrate d'aluminium, l'agent peptisant permettant une meilleure dispersion de l'alumine. Cette mise en œuvre nécessite de préformer de la poudre d'alumine et de diluer le mélange avec de l'eau afin de permettre son pompage et son atomisation. De plus, l'emploi d'alumine préformée limite à nouveau les interactions potentielles entre la phase active et la matrice oxyde à des interactions précurseurs de cobalt - surface oxyde et exclut la chimie des précurseurs moléculaires (ou conduisant à des espèces moléculaires).

### Résumé de l'invention

L'invention concerne un procédé de synthèse d'hydrocarbures paraffiniques linéaires à partir d'une charge comprenant du monoxyde de carbone et du dihydrogène en présence d'un catalyseur comprenant une matrice oxyde mésoporeuse et une teneur massique en élément cobalt comprise entre 0,5 et 60%, exprimée en % poids de métal par rapport à la masse totale dudit catalyseur, ledit catalyseur étant préparé selon un procédé comprenant au moins les étapes de :
a) mélange dans un solvant aqueux ou hydro-organique d'au moins un précurseur moléculaire comprenant du cobalt et d'au moins un précurseur moléculaire de ladite matrice oxyde mésoporeuse comprenant au moins un élément X choisi dans le groupe constitué par le silicium, l'aluminium, le titane, le zirconium, le cérium et leurs mélanges, lesdits précurseurs moléculaires étant solubilisés dans ledit solvant aqueux ou hydro-organique, ledit mélange comprend également au moins un tensioactif ;
b) atomisation par aérosol du mélange obtenu à l'étape a) pour conduire à la formation de gouttelettes sphériques ;
c) séchage desdites gouttelettes sphériques permettant d'obtenir des particules solides à une température comprise entre 10 et 300°C ;
d) activation desdites particules solides par un traitement réducteur de façon à former des nanoparticules de cobalt à l'état de valence 0.

### Intérêt de l'invention

Un aspect de l'invention est de proposer un procédé de synthèse d'hydrocarbures paraffiniques (procédé Fischer-Tropch) en présence d'un catalyseur préparé selon un procédé de préparation présentant une simplification inédite du procédé de fabrication du catalyseur utilisé classiquement dans le procédé Fischer-Tropsch, qui permet de diminuer le coût de production des hydrocarbures synthétiques obtenus et de répondre aux enjeux environnementaux toujours plus drastiques des prochaines décennies. Cette simplification est réalisée en développant un procédé de préparation dudit catalyseur par atomisation permettant d'incorporer totalement ou en partie au moins un précurseur de la phase active, c'est-à-dire au moins un précurseur de l'élément cobalt, lors de la formation de la matrice oxyde mésoporeuse, matrice dénommée habituellement « support » dans les méthodes de synthèse conventionnelles.

Le procédé de préparation du catalyseur utilisé selon l'invention met à profit les potentialités de la chimie sol-gel, et en particulier de la chimie inhérente à la réactivité de précurseurs moléculaires en solution, différente de la chimie ayant lieu entre un précurseur et un solide préformé ou deux solides préformés, que ce solide se présente sous la forme de nanoparticules de cobalt, de silice ou d'alumine, avec en particulier des interactions bien plus intimes du fait de la taille des molécules mises en présence. Dans la présente invention, l'incorporation directe d'au moins un précurseur de la phase active lors de la synthèse de la matrice oxyde mésoporeuse permet, en effet, de s'affranchir des interactions « précurseurs de la phase active/surface du support oxyde préformé » qui contrôlent habituellement en partie la teneur, la taille, l'accessibilité, et donc la dispersion, de ladite phase active. Le mélange conjoint d'au moins un précurseur moléculaire de l'élément cobalt avec au moins un précurseur moléculaire de ladite matrice oxyde mésoporeuse comprenant au moins un élément X choisi dans le groupe constitué par le silicium, l'aluminium, le titane, le zirconium, le cérium et leurs mélanges, combiné au processus d'atomisation, conduit in fine à des matériaux présentant des performances catalytiques différentes par rapport à leurs homologues obtenus selon des méthodologies plus conventionnelles.

### Exposé de l'invention

### Procédé de synthèse FT

Le procédé de synthèse d'hydrocarbures paraffiniques linéaires, également appelé Fischer-Tropsch, permet la production d'hydrocarbures essentiellement linéaires et saturés C5⁺. Conformément à l'invention, on entend par hydrocarbures essentiellement linéaires et saturés C5⁺, des hydrocarbures dont la proportion en composés hydrocarbonés ayant au moins 5 atomes de carbone par molécule représente au moins 50% en poids, de préférence au moins 80% en poids de l'ensemble des hydrocarbures formés, la teneur totale en composés oléfiniques présents parmi lesdits composés hydrocarbonés ayant au moins 5 atomes de carbone par molécule étant inférieure à 15% poids. Les hydrocarbures produits par le procédé de l'invention sont ainsi des hydrocarbures essentiellement paraffiniques, dont la fraction présentant les points d'ébullition les plus élevés peut être convertie avec un rendement élevé en distillats moyens (coupes gazole et kérosène) par un procédé catalytique d'hydroconversion tel que l'hydrocraquage et/ou l'hydroisomérisation.

De manière préférée, la charge employée pour la mise en œuvre du procédé de l'invention, est constituée par le gaz de synthèse qui est un mélange de monoxyde de carbone et d'hydrogène de rapports molaires H₂/CO pouvant varier entre 0,5 et 4 en fonction du procédé de fabrication dont il est issu. Le rapport molaire H₂/CO du gaz de synthèse est généralement voisin de 3 lorsque le gaz de synthèse est obtenu à partir du procédé de vaporeformage d'hydrocarbures ou d'alcool. Le rapport molaire H₂/CO du gaz de synthèse est de l'ordre de 1,5 à 2 lorsque le gaz de synthèse est obtenu à partir d'un procédé d'oxydation partielle. Le rapport molaire H₂/CO du gaz de synthèse est généralement voisin de 2,5 lorsqu'il est obtenu à partir d'un procédé de reformage autotherme. Le rapport molaire H₂/CO du gaz de synthèse est généralement voisin de 1 lorsqu'il est obtenu à partir d'un procédé de gazéification et de reformage d'hydrocarbures au CO₂ (dit reformage sec).

Le procédé Fischer-Tropsch selon l'invention est opéré sous une pression totale comprise entre 0,1 et 15 MPa, de préférence entre 0,5 et 10 MPa, sous une température comprise entre 150 et 350°C, de préférence entre 180 et 270°C. La vitesse volumique horaire est avantageusement comprise entre 100 et 20000 volumes de charge, avantageusement de gaz de synthèse, par volume de catalyseur et par heure (100 à 20000 h⁻¹) et de préférence entre 400 et 10000 volumes de gaz de synthèse par volume de catalyseur et par heure (400 à 10000 h⁻¹), le volume de charge étant mesuré à 25°C et 0,1 MPa.

Le procédé Fischer-Tropsch selon l'invention peut être effectué en réacteur de type autoclave parfaitement agité, lit bouillonnant, colonne à bulles, lit fixe ou lit mobile. De préférence, il est effectué dans un réacteur de type colonne à bulles.

De ce fait, la taille des grains du catalyseur utilisé dans le procédé Fischer-Tropsch peut être comprise entre quelques microns et 2 millimètres. Typiquement, pour une mise en œuvre en réacteur triphasique « slurry » (en colonne à bulles), le catalyseur est finement divisé et se trouve sous forme de particules. La taille des particules de catalyseur sera comprise entre 10 et 500 micromètres (µm), de manière préférée entre 10 et 300 µm et de manière très préférée entre 20 et 150 µm, et de manière encore plus préférée entre 20 et 120 µm.

### Procédé de préparation du catalyseur utilisé selon l'invention

Conformément à l'invention, le procédé de synthèse d'hydrocarbures paraffiniques linéaires est mis en œuvre en présence d'un catalyseur comprenant une matrice oxyde mésoporeuse et une teneur massique en élément cobalt comprise entre 0,5 et 60%, exprimée en % poids de métal par rapport à la masse totale dudit catalyseur, ledit catalyseur étant préparé selon un procédé de préparation comprenant au moins les étapes successives suivantes :
a) mélange dans un solvant aqueux ou hydro-organique d'au moins un précurseur moléculaire comprenant du cobalt et d'au moins un précurseur moléculaire de ladite matrice oxyde mésoporeuse comprenant au moins un élément X choisi dans le groupe constitué par le silicium, l'aluminium, le titane, le zirconium, le cérium et leurs mélanges, lesdits précurseurs moléculaires étant solubilisés dans ledit solvant aqueux ou hydro-organique, ledit mélange comprend également au moins un tensioactif ;
b) l'atomisation par aérosol du mélange obtenu à l'étape a) pour conduire à la formation de gouttelettes liquides sphériques ;
c) le séchage desdites gouttelettes permettant d'obtenir les particules solides à une température comprise entre 10 et 300°C ;
d) l'activation des particules solides obtenues à l'issue de l'étape c) (éventuellement de l'étape c1)) par un traitement réducteur, avantageusement sous hydrogène pur ou dilué, à haute température, de façon à former des particules de cobalt à l'état de valence zéro, c'est-à-dire sous forme métallique, phase active du catalyseur utilisé selon l'invention.

Ladite matrice oxyde est mésoporeuse, c'est-à-dire qu'elle se caractérise par des pores dont la taille varie entre 2 et 50 nm selon la classification de l'IUPAC (K. S. Sing et al., Pure Appl. Chem., 1985, 57, 603). En plus d'être mésoporeuse, ladite matrice peut être mésostructuré, c'est-à-dire présenter des mésopores de taille uniforme et répartis de façon périodique dans ladite matrice, ou bien à porosité hiérarchisée (présence de micropores et/ou macropores additionnelle aux mésopores). De façon très préférée, la matrice oxyde mésoporeuse du catalyseur utilisé selon l'invention est une silice amorphe mésostructurée sans micropores.

On entend par précurseur moléculaire comprenant l'élément cobalt, tout composé comprenant l'élément cobalt et pouvant libérer cet élément en solution sous forme réactive, c'est-à-dire le plus fréquemment sous une forme monomérique, un monomère étant assimilé en synthèse inorganique a une entité existant à l'échelle moléculaire et susceptible de subir des réactions de condensation conduisant à l'élaboration d'une phase oxyde. Ainsi, au moins un précurseur moléculaire de l'élément cobalt est avantageusement un sel, un complexe de coordination, un (hydr)oxyde, etc. Pour exemple et de façon non exhaustive, les sels de cobalt suivants peuvent être employés : Co(NO₃)₂ (nitrate), CoZ_{z} avec Z = Cl, Br, I, F et z = 2 ou 3 (halogénures), CoCO₃ (carbonate), CoSO₄ (sulfate), Co₃PO₄ (phosphate), Co(OOCCH₃)₂ (acétate), Co(CH₃COCHCOCH₃)₂ (acétylacétonate), Co₃(C₆H₅O₇)₂ (citrate), Co(C₂O₄) (oxalate) etc. De même, et toujours pour exemple, les complexes de coordination Co₂(CO)₈ (octacarbonyle de dicobalt) et Co(NH₃)Cl₃ peuvent être utilisés. L'emploi de l'hydroxyde Co(OH)₂ et d'oxydes de cobalt est également envisageable sous réserve que leur mise en solution assure la formation des espèces réactives monomériques mentionnées ci-dessus (via des conditions opératoires particulières telles que pH, température, solvants), c'est-à-dire que ledit oxyde ou hydroxyde ne reste pas sous forme solide, mais se dissolve dans le mélange.

De même, on entend par précurseur moléculaire de ladite matrice oxyde mésoporeuse comprenant au moins un élément X choisi dans le groupe constitué par le silicium, l'aluminium, le titane, le zirconium, le cérium et leurs mélanges, avantageusement choisi dans le groupe constitué par le silicium, l'aluminium leurs mélanges, très avantageusement étant le silicium, tout composé comprenant l'élément X et pouvant libérer cet élément en solution sous forme réactive, c'est-à-dire le plus fréquemment sous une forme monomérique, un monomère étant assimilé en synthèse inorganique a une entité existant à l'échelle moléculaire et susceptible de subir des réactions de condensation conduisant à l'élaboration d'une phase oxyde. Ainsi, un précurseur moléculaire de l'élément X peut être avantageusement un sel inorganique dudit élément X de formule XNₙ, (n = 3 ou 4), N étant un halogène, le groupement NO₃, un perchlorate ou un sulfate. Le précurseur dudit élément X peut être aussi un précurseur alcoxyde de formule X(OR)ₙ où R = éthyle, isopropyle, n-butyle, s-butyle, t-butyle, etc. ou un précurseur chélaté tel que X(C₅H₈O₂)ₙ, avec n = 3 ou 4. Le précurseur dudit élément X peut encore être un oxyde ou un hydroxyde dudit élément X sous réserve que sa mise en solution assure la formation des espèces réactives monomériques mentionnées ci-dessus, c'est-à-dire que ledit oxyde ou hydroxyde ne reste pas sous forme solide, mais se dissolve dans le mélange. Dans le cas préféré ou X est le silicium, le précurseur silicique est avantageusement le précurseur silicate de sodium de formule Na₂SiO₃, le précurseur chloré de formule SiCI4, un précurseur alcoxyde de formule Si(OR)₄₋ₐR'ₐ où R = H, méthyle, éthyle et R' est une chaîne alkyle ou une chaîne alkyle fonctionnalisée, par exemple par un groupement thiol, amino, β dicétone, acide sulfonique, a étant compris entre 0 et 4 ou d'un précurseur chloroalcoxyde de formule Si(OR)₄₋ₐClₐ où R = H, méthyle, éthyle, a étant compris entre 0 et 4.. Un précurseur silicique préféré est le tétraéthylorthosilicate (TEOS). Dans le cas préféré ou X est l'aluminium, le précurseur aluminique est avantageusement le précurseur un sel inorganique d'aluminium de formule AlN₃, N étant un halogène ou le groupement NO₃. De préférence, N est un nitrate. Le précurseur aluminique peut aussi être un sel inorganique d'aluminium de formule Al₂N'₃, N' étant le groupement sulfate SO₄. Le précurseur aluminique peut être aussi un précurseur alcoxyde de formule Al(OR")₃ ou R" = éthyle, isopropyle, n-butyle, s-butyle ou t-butyle ou un précurseur chélaté tel que l'aluminium acétylacétonate (Al(CH₇O₂)₃). Le précurseur aluminique peut aussi être un oxyde ou un hydroxyde d'aluminium, par exemple AIOOH.

Le précurseur moléculaire de l'élément cobalt, et le ou les précurseurs moléculaires de ladite matrice oxyde mésoporeuse sont solubilisés dans ledit solvant aqueux ou hydro-organique, avantageusement totalement solubilisés. Par solubilisés, on entend que les précurseurs sont dissous, ou mélangés s'ils sont déjà liquide, dans le solvant pour former un mélange homogène.

Avantageusement, ledit mélange selon ladite étape a) comprend pour seuls précurseurs moléculaires de ladite matrice oxyde mésoporeuse des précurseurs moléculaires comprenant l'élément silicium. La matrice oxyde mésoporeuse obtenue est alors constituée de silice.

Avantageusement, lequel ledit mélange selon ladite étape a) comprend pour seuls précurseurs moléculaires de ladite matrice oxyde mésoporeuse des précurseurs moléculaires comprenant l'élément silicium et des précurseurs moléculaires comprenant l'élément aluminium, de manière à ce que la teneur en silice soit comprise entre 0,5 à 95% poids par rapport à la masse totale de ladite matrice oxyde obtenue, de manière préférée, entre 0,5 et 30% poids, de manière encore plus préférée entre 1 et 30% poids, et de manière très préférée entre 1,5 et 20% poids. L'Homme du métier ajuste, selon des tests de routine, la quantité de précurseur moléculaire de manière à arriver à la teneur désirée, ajoutant des précurseurs au mélange lorsque la teneur obtenue est trop faible, et retirant des précurseurs au mélange lorsque la teneur obtenue est trop forte. La matrice oxyde mésoporeuse obtenue est alors constituée d'un aluminosilicate, c'est-à-dire un mélange des éléments silicium et aluminium.

Le mélange à l'issue de l'étape a) dudit procédé de préparation du catalyseur utilisé selon l'invention est clair, limpide, et visuellement monophasique, c'est-à-dire que les objets dans ledit mélange ont une taille inférieure au micromètre. Ce n'est donc ni une suspension, ni un slurry.

On entend par solvant hydro-organique une solution de mélange entre de l'eau et un solvant organique. De préférence, le solvant hydro-organique est une solution hydro-éthanolique. De façon préférée, le mélange selon ladite étape a) est réalisé dans un solvant aqueux, ledit mélange étant limpide et de pH neutre, basique ou acide, de préférence acide.

Par ailleurs, l'incorporation d'au moins un précurseur moléculaire de l'élément cobalt peut nécessiter la mise en solution de ce dernier préalablement à ladite étape a), ladite solution étant ensuite introduite dans le mélange selon ladite étape a). De manière préférée, le solvant utilisé pour la mise en solution d'au moins un précurseur moléculaire de l'élément cobalt est identique à au moins un des solvants utilisés pour le mélange de ladite étape a).

Ledit mélange selon l'étape a) comprend également au moins un tensioactif.

Lors de l'emploi d'un tensioactif pour la préparation du mélange selon l'étape a) du procédé de préparation du matériau selon l'invention, ce dernier étant usuellement utilisé comme agent pour structurer la porosité, notamment pour l'obtention d'une matrice oxyde mésostructurée, ledit tensioactif peut être choisi parmi tous tensioactif bien connu de l'Homme du métier. En particulier, il peut être ionique ou non ionique ou un mélange des deux. De préférence, le tensioactif ionique est choisi parmi les ions phosphonium et ammonium et très préférentiellement parmi les sels d'ammonium quaternaire comme le bromure de céthyltriméthylammonium (CTAB). De préférence, le tensioactif non ionique peut être tout (co)polymère possédant au moins deux parties de polarités différentes leur conférant des propriétés de macromolécules amphiphiles. De manière préférée, on utilise, dans le cadre de la présente invention, un copolymère à bloc constitué de chaînes de poly(oxyde d'alkylène), dont des chaines de poly(oxyde de propylène) notées (PPO) et des chaînes de poly(oxyde d'éthylène) notées (PEO). De manière très préférée, on utilise un composé de formule (PEO)_{w}-(PPO)_{y}-(PEO)_{z} où w est compris entre 5 et 300 et y est compris entre 33 et 300 et z est compris entre 5 et 300. De préférence, les valeurs de w et z sont identiques. On utilise très avantageusement un composé dans lequel w = 20, y = 70 et z = 20 (P123) et un composé dans lequel w = 106, y = 70 et z = 106 (F127). Les tensioactifs non-ioniques commerciaux connus sous le nom de Pluronic (BASF), Tetronic (BASF), Triton (Sigma), Tergitol (Union Carbide), Brij (Aldrich) sont utilisables en tant que tensioactifs non-ioniques.

L'étape b) d'atomisation du mélange obtenu à l'étape a)conduit à la formation de gouttelettes sphériques (aérosol). Le mélange obtenu à l'étape a) du procédé de préparation est mélangé à un premier gaz vecteur (air, azote, etc.) et l'ensemble produit un aérosol après passage dans la buse ultrasonique.

L'étape c) du procédé de préparation du catalyseur utilisé selon l'invention est un séchage desdites gouttelettes à une température comprise entre 10 et 300°C. La mise en contact de ces dernières avec un second gaz vecteur chauffé à une température contrôlée permet simultanément leur transport et l'évaporation progressive du(des) solvant(s) utilisé(s) pour la formation du mélange de l'étape a) du procédé et ainsi à l'obtention de particules solides, généralement sphériques. Un séchage complémentaire peut être envisagé, par exemple via un passage à l'étuve (ou équivalent) à une température comprise entre 50 et 130°C.

Avantageusement, ledit procédé de préparation comprend une étape c1) de traitement thermique des particules solides issues de l'étape c) et réalisée en amont de l'étape d) de manière à enlever l'eau résiduelle et les composés volatiles, dans une gamme de température de 130 à 1000°C, de manière préférée entre 250 et 600°C, et de manière plus préférée entre 350 et 500°C, durant une période inférieure à 72 h et de préférence inférieure à 24 h. Cette dernière est classiquement une calcination sous air, effectué en lit traversé, en lit fluidisé, en lit léché ou en atmosphère statique.

Dans un premier mode de réalisation particulier du procédé de préparation du catalyseur utilisé selon l'invention, on réalise juste avant l'étape d) une étape c') de traitement hydrothermique des particules solides obtenues à l'issue de l'étape c), éventuellement obtenues à l'issue de l'étape c1). L'effet technique de cette étape est d'augmenter la quantité de cobalt actif au détriment de la quantité de cobalt sous forme, par exemple, de silicate ou aluminate, lequel est inactif au regard des réactions mises en œuvre dans le procédé Fischer-Tropch.

Dans ladite étape c') du premier mode de réalisation particulier du procédé de préparation du catalyseur utilisé selon l'invention, on traite sous vapeur d'eau les particules solides obtenues à l'issue de l'étape c) du procédé à une température comprise entre 110 et 900°C, de manière préférée comprise entre 110 et 450°C, de manière encore plus préférée entre 110 et 250°C, pendant une durée de préférence allant de 30 minutes à 12 heures et avec un mélange air/vapeur, ledit mélange comprenant entre 2 et 80% (molaire) d'eau sous forme vapeur, de préférence entre 20 et 50 % d'eau.

Dans un deuxième mode de réalisation particulier du procédé de préparation du catalyseur utilisé selon l'invention, on réalise juste avant l'étape d) une étape c") d'imprégnation des particules solides obtenues à l'issue de l'étape c) ou à l'issue de l'étape c') par une solution aqueuse ou organique comprenant au moins un sel de métal du groupe VIIIB choisi dans le groupe constitué par le cobalt, le nickel, le ruthénium et le fer, de préférence le cobalt, et de séchage du produit obtenu à une température comprise entre 60 et 200°C. Cette étape peut permettre d'atteindre la teneur massique en élément Cobalt désirée sur le catalyseur final.

Ladite étape c") peut avantageusement être réalisée par imprégnation à sec, par imprégnation en excès, ou encore par dépôt - précipitation selon des méthodes bien connues de l'Homme du métier. De manière préférée, ladite étape d'imprégnation est réalisée par imprégnation à sec, de préférence à température ambiante. Ladite étape d'imprégnation consiste à mettre en contact les particules solides obtenues à l'issue de l'étape c) avec au moins une solution contenant au moins un précurseur dudit métal du groupe VIIIB, dont le volume est égal au volume poreux desdites particules à imprégner. Cette solution contient le précurseur métallique du ou des métaux du groupe VIIIB à la concentration voulue pour obtenir sur le catalyseur final la teneur en métal visée, avantageusement une teneur en métal comprise entre 0,5 et 60 % poids, et de préférence entre 5 et 30 % poids par rapport au poids du catalyseur. Le métal ou les métaux du groupe VIIIB sont mis au contact desdites particules solides par l'intermédiaire de tout précurseur métallique soluble en phase aqueuse ou en phase organique. Lorsqu'il est introduit en solution organique, le précurseur du métal du groupe VIIIB est de préférence l'oxalate ou l'acétate dudit métal du groupe VIIIB. De manière préférée, le précurseur du métal du groupe VIIIB est introduit en solution aqueuse, de préférence sous forme de nitrate, de carbonate, d'acétate, de chlorure, d'oxalate, de complexes formés par un polyacide ou un acide-alcool et ses sels, de complexes formés avec les acétylacétonates, ou de tout autre dérivé inorganique soluble en solution aqueuse, laquelle est mise en contact avec lesdites particules solides. Dans le cas préféré où le métal du groupe VIIIB est le cobalt, le précurseur de cobalt avantageusement utilisé est le nitrate de cobalt, l'oxalate de cobalt ou l'acétate de cobalt. De manière la plus préférée, le précurseur utilisé est le nitrate de cobalt. L'imprégnation d'au moins un sel de métal du groupe VIIIB peut être effectuée en une seule ou en plusieurs étapes d'imprégnation. Dans le cas de teneurs en métaux élevées, l'imprégnation en deux étapes voire en trois étapes est préférée. À l'issue de chacune des étapes d'imprégnation, il est préféré d'effectuer éventuellement au moins une étape supplémentaire de séchage, et/ou calcination et/ou de traitement sous vapeur d'eau, ce dernier étant tel que décrit lors de l'étape c'). Le précurseur de catalyseur ainsi obtenu est ensuite séché. Le séchage est avantageusement effectué à une température comprise entre 60°C et 200°C, de préférence pendant une durée allant de 30 minutes à 48 heures.

Conformément à l'étape d) du procédé de préparation du catalyseur utilisé selon l'invention, l'activation des particules solides obtenues à l'issue de l'étape c), avantageusement obtenues de l'étape c1), de l'étape c') ou de l'étape c"), est réalisée par un traitement réducteur. Ladite activation, ou ledit traitement réducteur peut être effectué *in situ* (dans le même réacteur que celui où est opérée la synthèse Fischer-Tropsch), ou *ex situ* avant d'être chargé dans le réacteur de synthèse FT. La température de ce traitement réducteur est préférentiellement comprise entre 200°C et 600°C et sa durée est généralement comprise entre 2 et 20 heures. Cette étape permet de réduire au moins une fraction du cobalt présent dans ledit catalyseur en cobalt métallique, c'est-à-dire à l'état de valence 0.

Au moins un élément choisi parmi les groupes VIIB, IA (c'est-à-dire un élément alcalin), IIA (c'est-à-dire un élément alcalino-terreux) IIIA, et les éléments Rh, Pd, Ag, Os, Ir, Pt, Au, pris seul ou en mélange, est avantageusement ajouté au mélange de l'étape a) et/ou lors de l'étape d'imprégnation c") du procédé de préparation du catalyseur mis en œuvre dans le procédé selon l'invention de manière à ce que ledit catalyseur comprenne une teneur massique en ledit au moins un élément comprise entre 20 ppm et 10%, de préférence entre 50 ppm et 5%, exprimé en % poids d'élément par rapport à la masse totale dudit catalyseur.

### Description du catalyseur

L'invention concerne un procédé Fischer-Tropsch de synthèse d'hydrocarbures mis en œuvre avec un catalyseur comprenant une matrice oxyde mésoporeuse et au moins l'élément cobalt, ledit élément étant incorporé lors de la formation de la dite matrice au moyen d'au moins un précurseur moléculaire comprenant du cobalt et d'au moins un précurseur moléculaire de ladite matrice oxyde mésoporeuse comprenant au moins un élément X choisi dans le groupe constitué par le silicium, l'aluminium, le titane, le zirconium, le cérium et leurs mélanges.

Le catalyseur utilisé selon l'invention comprend une teneur massique en élément cobalt comprise entre 0,5 et 60%, exprimée en % poids de métal par rapport à la masse totale dudit catalyseur et de préférence entre 5 et 30% poids.

De manière avantageuse, le catalyseur utilisé selon l'invention comprend une teneur massique comprise entre 20 ppm et 10 %, exprimé en % poids d'élément par rapport à la masse totale du catalyseur, de préférence entre 50 ppm et 5 % poids, d'au moins un élément choisi parmi les groupes VIIB, IA (élément alcalin), IIA (élément alcalino-terreux), IIIA, et les éléments Rh, Pd, Ag, Os, Ir, Pt, Au, pris seul ou en mélange.

Le catalyseur préparé selon l'invention se caractérise par une surface spécifique généralement comprise entre 50 et 600 m²/g, de préférence entre 70 et 500 m²/g et de façon encore plus préférée entre 90 et 400 m²/g, par un volume poreux généralement compris entre 0,1 et 1 ml/g, de préférence entre 0,2 et 0,7 ml/g et de façon encore plus préférée entre 0,2 et 0,6 ml/g et par un diamètre de pores généralement compris entre 2 et 12 nm et de préférence entre 5 et 9 nm.

Le catalyseur préparé selon l'invention peut présenter une morphologie sous forme de billes, d'extrudés (par exemple de forme trilobes ou quadrilobes) ou de pastilles, notamment lorsque ledit catalyseur est mis en œuvre dans un réacteur fonctionnant en lit fixe, ou présenter une morphologie sous forme de poudre de granulométrie variable, notamment lorsque ledit catalyseur est mis en œuvre dans un réacteur de type colonne à bulles. De préférence, le catalyseur utilisé selon l'invention présente une morphologie sous forme de poudre de granulométrie variable.

Pour illustrer l'invention et pour permettre à l'Homme du métier de l'exécuter, nous présentons ci-après différents modes de réalisation du procédé de préparation d'un catalyseur utilisé pour la synthèse Fischer-Tropsch ; cependant cela ne saurait limiter la portée de l'invention.

### Exemples

Dans les exemples qui suivent, la technique aérosol utilisée est celle décrite ci-dessus dans l'exposé de l'invention. L'activation des catalyseurs est réalisée *ex situ* préalablement aux tests catalytiques représentatifs du procédé de synthèse FT. L'atomiseur utilisé est un appareil commercial de modèle B290 fourni par Buchi, possédant une buse d'atomisation à ultrasons.

### Exemple 1 [conforme à la préparation du catalyseur utilisé selon l'invention]

### Préparation du catalyseur A non activé comprenant 15% poids en élément Co par rapport à la masse totale du catalyseur et une matrice silicique obtenu par incorporation du précurseur moléculaire de l'élément cobalt Co(NO₃)₂ lors de la formation d'une matrice oxyde silicique mésostructurée.

13,53 g de TEOS (tétraéthylorthosilicate, Si(OC₂H₅)₄) sont ajoutés à 24,22 g d'une solution d'acide nitrique à pH = 2, l'ensemble étant laissé à hydrolyser sous agitation à température ambiante pendant 16 h. Parallèlement, 4,45 g de Pluronic P123 sont ajoutés à 10,69 g d'éthanol et 44,84 g d'une solution d'acide nitrique à pH = 2, l'ensemble étant également laissé sous agitation à température ambiante pendant 16 h. La solution résultant de l'hydrolyse du TEOS est alors lentement ajoutée à la solution contenant le P123 dissout. Après 10 min d'homogénéisation, 5,03 g d'une solution aqueuse de nitrate de cobalt Co(NO₃)₂ (13,4% massique en élément cobalt) sont finalement ajoutés. Après 15 min d'homogénéisation, l'ensemble est envoyé dans l'outil d'atomisation Buchi B290. Après pulvérisation grâce à la buse ultrasonique, l'aérosol obtenu est transporté et séché grâce à un gaz vecteur (air sec) chauffé en entrée à 220°C. La poudre récoltée est séchée complémentairement une nuit à l'étude à 100°C, puis traitée sous vapeur d'eau (mélange eau/air à 50% molaire) pendant 2 h à 200°C et finalement calcinée sous air pendant 12 h à T = 400°C. Le catalyseur A non activé obtenu se caractérise par les propriétés texturales suivantes (via une analyse par Volumétrie à l'azote) : surface spécifique S_{BET} = 460 m²/g, volume poreux Vₚ = 0,6 ml/g, et diamètre de pores (mesuré par rapport à la branche de désorption de l'isotherme) φ = 6,8 nm. La structure mésoporeuse obtenue est de type vermiculaire (via une analyse DRX aux bas angles).

### Exemple 2 [conforme à la préparation du catalyseur utilisé selon l'invention]

### Préparation du catalyseur B non activé comprenant 15% poids en élément Co par rapport à la masse totale du catalyseur et une matrice silicique obtenu par incorporation du précurseur moléculaire de l'élément cobalt Co(NO₃)₂ lors de la formation d'une matrice oxyde silicique mésostructurée.

Le catalyseur B diffère du catalyseur A en ce qu'il ne subit pas d'étape de traitement sous vapeur d'eau lors de sa préparation. Le pH de la solution lors du mélange est également plus faible (1 au lieu de 2).

13,53 g de TEOS (tétraéthylorthosilicate, Si(OC₂H₅)₄) sont ajoutés à 24,22 g d'une solution d'acide nitrique à pH = 1, l'ensemble étant laissé à hydrolyser sous agitation à température ambiante pendant 16 h. Parallèlement, 4,45 g de Pluronic P123 sont ajoutés à 10,69 g d'éthanol et 44,84 g d'une solution d'acide nitrique à pH = 1, l'ensemble étant également laissé sous agitation à température ambiante pendant 16 h. La solution résultant de l'hydrolyse du TEOS est alors lentement ajoutée à la solution contenant le P123 dissout. Après 10 min d'homogénéisation, 5,03 g d'une solution aqueuse de nitrate de cobalt Co(NO₃)₂ (13,4% massique en élément cobalt) sont finalement ajoutés. Après 15 min d'homogénéisation, l'ensemble est envoyé dans l'outil d'atomisation Buchi B290. Après pulvérisation grâce à la buse ultrasonique, l'aérosol obtenu est transporté et séché grâce à un gaz vecteur (air sec) chauffé en entrée à 220°C. La poudre récoltée est séchée complémentairement une nuit à l'étude à 100°C, puis calcinée sous air pendant 12 h à T = 400°C. Le catalyseur B non activé obtenu se caractérise par les propriétés texturales suivantes (via une analyse par Volumétrie à l'azote) : surface spécifique S_{BET} = 338 m²/g, volume poreux Vₚ = 0,6 ml/g, et diamètre de pores (mesuré par rapport à la branche de désorption de l'isotherme) φ = 5,2 nm. La structure mésoporeuse obtenue est de type vermiculaire (via une analyse DRX aux bas angles).

### Exemple 3 [conforme à la préparation du catalyseur utilisé selon l'invention]

### Préparation du catalyseur C non activé comprenant 15% poids en élément Co par rapport à la masse totale du catalyseur et une matrice aluminosilicate à 5% poids de silice par rapport à la masse totale de la matrice, obtenu par incorporation du précurseur moléculaire de l'élément cobalt Co(NO₃)₂ lors de la formation d'une matrice oxyde aluminosilicate mésoporeuse.

15,16 g d'AlCl₃, 6H₂O et 0,53 g de TEOS sont ajoutés à 23,69 g d'une solution d'acide nitrique à pH = 2, l'ensemble étant laissé à hydrolyser sous agitation à température ambiante pendant 30 min. Préalablement, 4,36 g de Pluronic P123 sont ajoutés à 10,40 g d'éthanol et 43,99 g d'une solution d'acide nitrique à pH = 2, l'ensemble étant laissé sous agitation à température ambiante pendant 16 h. La solution résultant de l'hydrolyse des précurseurs aluminique et silicique est alors lentement ajoutée à la solution contenant le P123 dissout. Après 10 min d'homogénéisation, 8,7 g d'une solution aqueuse de nitrate de cobalt Co(NO₃)₂ (13,4% massique en élément cobalt) sont finalement ajoutés. Après 15 min d'homogénéisation, l'ensemble est envoyé dans l'outil d'atomisation Buchi B290. Après pulvérisation grâce à la buse ultrasonique, l'aérosol obtenu est transporté et séché grâce à un gaz vecteur (air sec) chauffé en entrée à 220°C. La poudre récoltée est séchée complémentairement une nuit à l'étude à 100°C, puis traitée sous vapeur d'eau (mélange eau/air à 50% molaire) pendant 2 h à 200°C et finalement calcinée sous air pendant 12 h à T = 400°C. Le catalyseur C non activé obtenu se caractérise par les propriétés texturales suivantes (via une analyse par Volumétrie à l'azote) : surface spécifique S_{BET} = 60 m²/g, volume poreux Vₚ = 0,2 ml/g, et diamètre de pores (mesuré par rapport à la branche de désorption de l'isotherme) φ = 6,5 nm.

### Exemple 4 [conforme à la préparation du catalyseur utilisé selon l'invention]

### Préparation du catalyseur D non activé comprenant 15% poids en élément Co par rapport à la masse totale du catalyseur et une matrice silicique obtenu par incorporation d'une partie du précurseur moléculaire de l'élément cobalt Co(NO₃)₂ lors de la formation d'une matrice oxyde silicique mésostructurée puis incorporation d'une partie du précurseur moléculaire de l'élément Co(NO₃)₂ par imprégnation à sec sur le solide obtenu lors de la première étape.

13,53 g de TEOS (tétraéthylorthosilicate, Si(OC₂H₅)₄) sont ajoutés à 24,22 g d'une solution d'acide nitrique à pH = 2, l'ensemble étant laissé à hydrolyser sous agitation à température ambiante pendant 16 h. Parallèlement, 4,45 g de Pluronic P123 sont ajoutés à 10,69 g d'éthanol et 44,84 g d'une solution d'acide nitrique à pH = 2, l'ensemble étant également laissé sous agitation à température ambiante pendant 16 h. La solution résultant de l'hydrolyse du TEOS est alors lentement ajoutée à la solution contenant le P123 dissout. Après 10 min d'homogénéisation, 1,68 g d'une solution aqueuse de nitrate de cobalt Co(NO₃)₂ (13,4% massique en élément cobalt) sont finalement ajoutés. Après 15 min d'homogénéisation, l'ensemble est envoyé dans l'outil d'atomisation Buchi B290. Après pulvérisation grâce à la buse ultrasonique, l'aérosol obtenu est transporté et séché grâce à un gaz vecteur (air sec) chauffé en entrée à 220°C. La poudre récoltée est séchée complémentairement une nuit à l'étude à 100°C, puis calcinée sous air pendant 12 h à T = 400°C. Le solide obtenu se caractérise par les propriétés texturales suivantes (via une analyse par Volumétrie à l'azote) : surface spécifique S_{BET} = 345 m²/g, volume poreux Vₚ = 0,5 ml/g, et diamètre de pores (mesuré par rapport à la branche de désorption de l'isotherme) φ = 7,1 nm. La structure mésoporeuse obtenue est de type vermiculaire (via une analyse DRX aux bas angles).

Le solide obtenu est ensuite imprégné à sec par une solution aqueuse de nitrate de cobalt Co(NO₃)₂ (13,4% massique en élément cobalt). La quantité de solution aqueuse de nitrate de cobalt est adaptée pour introduire 10 %poids d'élément cobalt sur le solide final, la solution de nitrate de cobalt est complétée au volume poreux par de l'eau déminéralisée. Après 12 heures de séchage en étuve à 120°C, le solide est calciné 2 heures à 420°C sous un flux d'air en réacteur de type lit traversé. Le catalyseur D non activé obtenu contient 15,2% pds de Co.

### Exemple 5 [non conforme à la préparation du catalyseur utilisé selon l'invention]

### Préparation du catalyseur E non activé comprenant 15% poids en élément Co par rapport à la masse totale du catalyseur et une matrice silicique obtenu par formation d'une matrice oxyde silicique mésoporeuse puis incorporation du précurseur moléculaire de l'élément Co(NO₃)₂ par imprégnation à sec sur le solide obtenu lors de la première étape.

13,53 g de TEOS (tétraéthylorthosilicate, Si(OC₂H₅)₄) sont ajoutés à 24,22 g d'une solution d'acide nitrique à pH = 2, l'ensemble étant laissé à hydrolyser sous agitation à température ambiante pendant 16 h. Parallèlement, 4,45 g de Pluronic P123 sont ajoutés à 10,69 g d'éthanol et 44,84 g d'une solution d'acide nitrique à pH = 2, l'ensemble étant également laissé sous agitation à température ambiante pendant 16 h. La solution résultant de l'hydrolyse du TEOS est alors lentement ajoutée à la solution contenant le P123 dissout. Après 15 min d'homogénéisation, l'ensemble est envoyé dans l'outil d'atomisation Buchi B290. Après pulvérisation grâce à la buse ultrasonique, l'aérosol obtenu est transporté et séché grâce à un gaz vecteur (air sec) chauffé en entrée à 220°C. La poudre récoltée est séchée complémentairement une nuit à l'étude à 100°C, puis calcinée sous air pendant 12 h à T = 400°C. Le solide obtenu se caractérise par les propriétés texturales suivantes (via une analyse par Volumétrie à l'azote) : surface spécifique S_{BET} = 129 m²/g, volume poreux Vₚ = 0,24 ml/g, et diamètre de pores (mesuré par rapport à la branche de désorption de l'isotherme) φ = 8,4 nm.

Le solide obtenu est ensuite imprégné à sec par une solution aqueuse de nitrate de cobalt Co(NO₃)₂ (13,4% massique en élément cobalt) au volume poreux sans dilution. Après 12 heures de séchage en étuve à 120°C, le solide est calciné 2 heures à 420°C sous un flux d'air en réacteur de type lit traversé. Les étapes d'imprégnation, séchage, calcination sont répétées 2 fois. Le catalyseur E non activé obtenu contient 14,6% pds de Co.

### Exemple 6

### Mise en œuvre des catalyseurs A à E en synthèse Fischer-Tropsch

Les catalyseurs A à E, avant d'être successivement testés en conversion du gaz de synthèse, sont réduits ex situ sous un flux d'hydrogène pur à 400°C pendant 16 heures en réacteur tubulaire. Une fois le catalyseur réduit, il est déchargé sous atmosphère d'argon et enrobé dans de la Sasolwax® pour être stocké à l'abri de l'air avant test. La réaction de synthèse Fischer-Tropsch est opérée dans un réacteur de type slurry et fonctionnant en continu et opérant avec une concentration de 10% (vol) de catalyseur en phase slurry.

Les conditions de test sont les suivantes : température = 230°C ; pression totale = 2MPa ; rapport molaire H₂/CO=2. La conversion du CO est maintenue entre 45 et 50% pendant toute la durée du test. Les conditions de test sont ajustées de façon à être à iso conversion de CO quelle que soit l'activité du catalyseur.

Les résultats, en terme d'activité, ont été calculés pour les catalyseurs A à E par rapport au catalyseur E servant de référence et figurent dans le tableau 1. Les sélectivités en formation de méthane sont également aussi données.

Les résultats du tableau 1 montrent les performances catalytiques des catalyseurs A à E tant en terme d'activité et de sélectivité. Il apparaît que les catalyseurs selon l'invention obtenus en moins d'étapes unitaires, présentent des performances au moins similaires au catalyseur de référence non-conforme à l'invention.

**Tableau 1**

| Catalyseurs | Nombre d'étapes unitaires de synthèse | Activité relative après 300 h de test sous charge syngas | Sélectivité de formation du méthane (%) |
|---|---|---|---|
| A (conforme) | 5 | 175 | 9 |
| B (conforme) | 4 | 129 | 12 |
| C (conforme) | 5 | 95 | 10 |
| D (conforme) | 7 | 258 | 8 |
| E (non conforme) | 13 | 100 (base) | 11 |

## Revendications

1. Procédé de synthèse d'hydrocarbures paraffiniques linéaires à partir d'une charge comprenant du monoxyde de carbone et du dihydrogène en présence d'un catalyseur comprenant une matrice oxyde mésoporeuse et une teneur massique en élément cobalt comprise entre 0,5 et 60%, exprimée en % poids de métal par rapport à la masse totale dudit catalyseur, ledit catalyseur étant préparé selon un procédé de préparation comprenant au moins les étapes de :
a) mélange dans un solvant aqueux ou hydro-organique d'au moins un précurseur moléculaire comprenant du cobalt et d'au moins un précurseur moléculaire de ladite matrice oxyde mésoporeuse comprenant au moins un élément X choisi dans le groupe constitué par le silicium, l'aluminium, le titane, le zirconium, le cérium et leurs mélanges, lesdits précurseurs moléculaires étant solubilisés dans ledit solvant aqueux ou hydro-organique, ledit mélange comprend également au moins un tensioactif ;
b) atomisation par aérosol du mélange obtenu à l'étape a) pour conduire à la formation de gouttelettes sphériques ;
c) séchage desdites gouttelettes sphériques permettant d'obtenir des particules solides à une température comprise entre 10 et 300°C ;
d) activation desdites particules solides par un traitement réducteur de façon à former des nanoparticules de cobalt à l'état de valence 0.

2. Procédé selon la revendication 1 dans lequel ledit mélange selon ladite étape a) comprend pour seuls précurseurs moléculaires de ladite matrice oxyde mésoporeuse des précurseurs moléculaires comprenant l'élément silicium.

3. Procédé selon la revendication 1 dans lequel ledit mélange selon ladite étape a) comprend pour seuls précurseurs moléculaires de ladite matrice oxyde mésoporeuse des précurseurs moléculaires comprenant l'élément silicium et des précurseurs moléculaires comprenant l'élément aluminium, de manière à ce que la teneur en silice soit comprise entre 0,5 à 95% poids par rapport à la masse totale de ladite matrice oxyde.

4. Procédé selon l'une des revendications 1 à 3 dans lequel au moins un élément choisi parmi les groupes VIIB, IA, IIA et IIIA, et les éléments Rh, Pd, Ag, Os, Ir, Pt, Au, pris seul ou en mélange, est ajouté au mélange de l'étape a) de manière à ce que ledit catalyseur comprenne une teneur massique en ledit au moins un élément comprise entre 20 ppm et 10%, exprimé en % poids d'élément par rapport à la masse totale dudit catalyseur.

5. Procédé selon l'une des revendications 1 à 4 dans lequel ledit procédé de préparation comprend une étape c1) de traitement thermique des particules solides issues de l'étape c) et réalisée en amont de l'étape d), dans une gamme de température de 130 à 1000°C, durant une période inférieure à 72 h et de préférence inférieure à 24 h.

6. Procédé selon l'une des revendications 1 à 4 dans lequel ledit procédé de préparation comprend une étape c') de traitement hydrothermique des particules solides issues de l'étape c) et réalisée en amont de l'étape d), sous vapeur d'eau à une température comprise entre 110 et 900°C, pendant une durée de préférence allant de 30 minutes à 12 heures et avec un mélange air/vapeur, ledit mélange comprenant entre 2 et 80% (molaire) d'eau sous forme vapeur.

7. Procédé selon la revendication 5 dans lequel ledit procédé de préparation comprend une étape c') de traitement hydrothermique des particules solides issues de l'étape c1) et réalisée en amont de l'étape d), sous vapeur d'eau à une température comprise entre 110 et 900°C, pendant une durée de préférence allant de 30 minutes à 12 heures et avec un mélange air/vapeur, ledit mélange comprenant entre 2 et 80% (molaire) d'eau sous forme vapeur.

8. Procédé selon l'une des revendications 1 à 7 comprenant juste avant l'étape d) une étape c") d'imprégnation des particules solides obtenues par une solution aqueuse ou organique comprenant au moins un sel de métal du groupe VIIIB choisi dans le groupe constitué par le cobalt, le nickel, le ruthénium et le fer, et de séchage du produit obtenu à une température comprise entre 60 et 200°C.

9. Procédé selon la revendication 8 dans lequel au moins un élément choisi parmi les groupes VIIB, IA, IIA, IIIA, et les éléments Rh, Pd, Ag, Os, Ir, Pt, Au, pris seul ou en mélange, est ajouté lors de l'étape d'imprégnation c") de manière à ce que ledit catalyseur comprenne une teneur massique en ledit au moins un élément comprise entre 20 ppm et 10%, exprimé en % poids d'élément par rapport à la masse totale dudit catalyseur

10. Procédé de synthèse d'hydrocarbures paraffiniques selon l'une des revendications 1 à 9 dans lequel le rapport molaire H₂/CO est compris entre 0,5 et 4, opéré à une pression totale comprise entre 0,1 et 15 MPa, sous une température comprise entre 150 et 350°C, et à une vitesse volumique horaire comprise entre 100 et 20000 volumes de charge par volume de catalyseur et par heure.

## Patentansprüche

1. Verfahren zur Synthese von linearen paraffinischen Kohlenwasserstoffen aus einem Einsatzmaterial, das Kohlenmonoxid und molekularen Wasserstoff enthält, in Gegenwart eines Katalysators, der eine mesoporöse Oxidmatrix und einen Gewichtsanteil des Elements Kobalt im Bereich zwischen 0,5 % bis 60 % enthält, ausgedrückt in Gew.-% Metall bezogen auf das Gesamtgewicht des Katalysators, wobei der Katalysator nach einem Herstellungsverfahren hergestellt wird, das mindestens die folgenden Schritte umfasst:
a) Mischen, in einem wässrigen oder hydroorganischen Lösungsmittel, mindestens einer molekularen Vorstufe, umfassend Kobalt, und mindestens einer molekularen Vorstufe der mesoporösen Oxidmatrix, umfassend mindestens ein Element X, ausgewählt aus der Gruppe bestehend aus Silizium, Aluminium, Titan, Zirkonium, Cer und Gemischen davon, wobei die molekularen Vorstufen in dem wässrigen oder hydroorganischen Lösungsmittel gelöst sind, wobei das Gemisch außerdem mindestens ein Tensid umfasst;
b) Aerosolzerstäuben des in Schritt a) erhaltenen Gemischs, um zur Bildung von kugelförmigen Flüssigkeitströpfchen zu führen;
c) Trocknen der kugelförmigen Tröpfchen, um feste Teilchen zu erhalten, die bei einer Temperatur im Bereich von 10°C bis 300 °C fest sind;
d) Aktivieren der festen Teilchen mittels einer Reduktionsbehandlung, um Nanoteilchen aus Kobalt mit einer Valenzstufe 0 zu bilden.

2. Verfahren nach Anspruch 1, wobei das Gemisch nach Schritt a) als einzige molekulare Vorstufe der mesoporösen Oxidmatrix molekulare Vorstufen umfasst, die das Element Silizium umfassen.

3. Verfahren nach Anspruch 1, wobei das Gemisch nach Schritt a) als einzige molekulare Vorstufen der mesoporösen Oxidmatrix molekulare Vorstufen umfasst, die das Element Silizium umfassen, und molekulare Vorstufen, die das Element Aluminium umfassen, so dass der Siliziumdioxidgehalt im Bereich von 0,5 bis 95 Gew.-%, bezogen auf das Gesamtgewicht der Oxidmatrix, liegt.

4. Verfahren nach einem der Ansprüche 1 bis 3, wobei mindestens ein Element, ausgewählt aus den Gruppen VIIB, IA, IIA und IIIA und den Elementen Rh, Pd, Ag, Os, Ir, Pt, Au, allein oder im Gemisch, derart zu dem Gemisch aus Schritt a) gegeben werden, dass der Katalysator einen Gewichtsanteil des mindestens einen Elements im Bereich von 20 ppm bis 10% umfasst, ausgedrückt in Gew.-% des Elements bezogen auf das Gesamtgewicht des Katalysators.

5. Verfahren nach einem der Ansprüche 1 bis 4, wobei das Herstellungsverfahren einen Schritt c1) zur Wärmebehandlung der aus Schritt c) erhaltenen festen Teilchen umfasst, der stromaufwärts von Schritt d) in einem Temperaturbereich von 130 bis 1.000 °C, für einen Zeitraum von weniger als 72 h und vorzugsweise weniger als 24 h durchgeführt wird.

6. Verfahren nach einem der Ansprüche 1 bis 4, wobei das Herstellungsverfahren einen Schritt c') zur hydrothermischen Behandlung der aus Schritt c) erhaltenen festen Teilchen umfasst und stromaufwärts von Schritt d) unter Wasserdampf bei einer Temperatur im Bereich zwischen 110 und 900 °C für eine Dauer, die vorzugsweise zwischen 30 Minuten und 12 Stunden liegt, und mit einem Luft/WasserdampfGemisch durchgeführt wird, wobei das Gemisch zwischen 2 und 80 % (molar) Wasser in Form von Dampf umfasst.

7. Verfahren nach Anspruch 5, wobei das Herstellungsverfahren einen Schritt c') zur hydrothermischen Behandlung der aus Schritt c1) erhaltenen festen Teilchen umfasst und stromaufwärts von Schritt d) unter Wasserdampf bei einer Temperatur im Bereich zwischen 110 und 900 °C für eine Dauer, die vorzugsweise zwischen 30 Minuten und 12 Stunden liegt, und mit einem Luft/Wasserdampf-Gemisch durchgeführt wird, wobei das Gemisch zwischen 2 und 80 % (molar) Wasser in Form von Dampf umfasst.

8. Verfahren nach einem der Ansprüche 1 bis 7, umfassend unmittelbar vor Schritt d) einen Schritt c") zum Imprägnieren der erhaltenen festen Teilchen mittels einer wässrigen oder organischen Lösung, umfassend mindestens ein Salz eines Metalls aus der Gruppe VIIIB, ausgewählt aus der Gruppe bestehend aus Kobalt, Nickel, Ruthenium und Eisen, und Trocknen des erhaltenen Produkts bei einer Temperatur im Bereich zwischen 60 und 200 °C.

9. Verfahren nach Anspruch 8, wobei mindestens ein Element, ausgewählt aus den Gruppen VIIB, IA, IIA, IIIA und den Elementen Rh, Pd, Ag, Os, Ir, Pt, Au, allein oder im Gemisch, während des Imprägnierschritts c") derart zugegeben wird, dass der Katalysator einen Gewichtsanteil des mindestens einen Elements im Bereich zwischen 20 ppm und 10 % umfasst, ausgedrückt in Gew.-% des Elements bezogen auf das Gesamtgewicht des Katalysators.

10. Verfahren zur Synthese von paraffinischen Kohlenwasserstoffen nach einem der Ansprüche 1 bis 9, wobei das H₂/CO-Molverhältnis im Bereich zwischen 0,5 und 4 liegt, und es bei einem Gesamtdruck im Bereich zwischen 0,1 und 15 MPa, bei einer Temperatur im Bereich zwischen 150 und 350 °C und bei einer Raumgeschwindigkeit pro Stunde im Bereich von 100 bis 20.000 Volumina Einsatzmaterial pro Volumen Katalysator und pro Stunde betrieben wird.

## Claims

1. A process for the synthesis of linear paraffinic hydrocarbons from a feed comprising carbon monoxide and dihydrogen in the presence of a catalyst comprising a mesoporous oxide matrix and a content by weight of the element cobalt in the range 0.5% to 60%, expressed as the % by weight of metal with respect to the total weight of said catalyst, said catalyst being prepared in accordance with a preparation process comprising at least the steps of:
a) mixing, in an aqueous or hydro-organic solvent, at least one molecular precursor comprising cobalt and at least one molecular precursor of said mesoporous oxide matrix comprising at least one element X selected from the group constituted by silicon, aluminium, titanium, zirconium, cerium and mixtures thereof, said molecular precursors being dissolved in said aqueous or hydro-organic solvent; said mixture also comprising at least one surfactant;
b) aerosol spray drying the mixture obtained in step a) in order to result in the formation of spherical liquid droplets;
c) drying said spherical droplets in order to obtain solid particles at a temperature in the range 10°C to 300°C;
d) activation of said solid particles by means of a reduction treatment in a manner such as to form nanoparticles of cobalt with an oxidation state of 0.

2. The process as claimed in claim 1, in which said mixture in accordance with said step a) comprises molecular precursors comprising the element silicon as the only molecular precursors of said mesoporous oxide matrix.

3. The process as claimed in claim 1, in which said mixture in accordance with said step a) comprises, as the only molecular precursors of said mesoporous oxide matrix, molecular precursors comprising the element silicon and molecular precursors comprising the element aluminium, in a manner such that the silica content is in the range 0.5% to 95% by weight with respect to the total weight of said oxide matrix.

4. The process as claimed in one of claims 1 to 3, in which at least one element selected from groups VIIB, IA, IIA and IIIA, and the elements Rh, Pd, Ag, Os, Ir, Pt, Au, alone or as a mixture, is added to the mixture of step a) in a manner such that said catalyst comprises a content by weight of said at least one element in the range 20 ppm to 10%, expressed as a % by weight of the element with respect to the total weight of said catalyst.

5. The process as claimed in one of claims 1 to 4, in which said preparation process comprises a step c1) for heat treatment of the solid particles obtained from step c) and carried out upstream of step d) at a temperature in the range 130°C to 1000°C, for a period of less than 72 h, preferably less than 24 h.

6. The process as claimed in one of claims 1 to 4, in which said preparation process comprises a step c') for hydrothermal treatment of the solid particles obtained from step c) and carried out upstream of step d), in steam at a temperature in the range 110°C to 900°C, preferably for a period of 30 minutes to 12 hours and with an air/steam mixture, said mixture comprising in the range 2% to 80% (molar) of water in the form of steam.

7. The process as claimed in claim 5, in which said preparation process comprises a step c') for hydrothermal treatment of the solid particles obtained from step c1) and carried out upstream of step d), in steam at a temperature in the range 110°C to 900°C preferably for a period of 30 minutes to 12 hours and with an air/steam mixture, said mixture comprising in the range 2% to 80% (molar) of water in the form of steam.

8. The process as claimed in one of claims 1 to 7 comprising, just before step d), a step c") for impregnation of the solid particles obtained with an aqueous or organic solution comprising at least one salt of a metal from group VIIIB selected from the group constituted by cobalt, nickel, ruthenium and iron, and drying the product obtained at a temperature in the range 60°C to 200°C.

9. The process as claimed in claim 8, in which at least one element selected from groups VIIB, IA, IIA and IIIA, and the elements Rh, Pd, Ag, Os, Ir, Pt, Au, alone or as a mixture, is added during the impregnation step c") in a manner such that said catalyst comprises a content by weight of said at least one element in the range 20 ppm to 10%, expressed as a % by weight of the element with respect to the total weight of said catalyst.

10. A process for the synthesis of paraffinic hydrocarbons as claimed in one of claims 1 to 9, in which the H₂/CO molar ratio is in the range 0.5 to 4, operated at a total pressure in the range 0.1 to 15 MPa, at a temperature in the range 150°C to 350°C, and at an hourly space velocity in the range 100 to 20000 volumes of feed per volume of catalyst per hour.
